# EUROPEAN PATENT APPLICATION

(11) **EP 4 468 383 A1**
(43) Date of publication of application: **27.11.2024**
(21) Application number: 24162802.3
(22) Date of filing: 11.03.2024
(51) Int. Cl.: H01M 4/04, H01M 4/133, H01M 4/134, H01M 4/1393, H01M 4/1395, H01M 4/36, H01M 4/38, H01M 4/587, H01M 4/62, H01M 4/02

(54) **NEGATIVE ELECTRODE FOR RECHARGEABLE LITHIUM BATTERY AND RECHARGEABLE LITHIUM BATTERY INCLUDING SAME**

(30) Priority: 04.05.2023 KR 20230058752
(71) Applicant: Samsung SDI Co., Ltd., Yongin-si, Gyeonggi-do 17084 (KR)
(72) Inventor: JUNG, Injoe, 17084 Yongin-si (KR)
(74) Representative: Marks & Clerk LLP

(57) **Abstract**

A negative electrode for a rechargeable lithium battery and a rechargeable lithium battery including the same are described. The negative electrode includes a current collector; and a negative electrode active material layer on the current collector and including a negative electrode active material, wherein the negative electrode active material includes Si in an amount of greater than about 0 volume% and less than or equal to about 70 volume% based on the total 100 volume% of the negative electrode active material layer, and at least one hole is in the negative electrode active material layer, a volume of the at least one hole is about 5 times or less the total volume of Si.

## Description

### BACKGROUND

### 1. Field

The present disclosure herein relates to a negative electrode for a rechargeable lithium battery and a rechargeable lithium battery including the same.

### 2. Description of the Related Art

Recently, with the rapid spread (and/or development) of electronic (and/or electric) devices that utilize batteries, such as mobile phones, laptop computers, and/or electric vehicles, a demand for small, lightweight, and/or relatively high-capacity rechargeable lithium batteries is rapidly increasing.

Crystalline carbon such as graphite is mainly utilized as a negative electrode active material for rechargeable lithium batteries, but its capacity of 360 mAh/g is relatively low, and research is being actively conducted on silicon-based active materials with a capacity of more than four times higher.

### SUMMARY

Aspects according to some embodiments are directed toward a negative electrode for a rechargeable lithium battery that may effectively reduce volume expansion that occurs during charging and discharging and has improved high-rate charging and cycle-life characteristics.

Aspects according to some embodiments are directed toward a rechargeable lithium battery including the negative electrode.

Additional aspects will be set forth in part in the description which follows and, in part, will be apparent from the description, or may be learned by practice of the presented embodiments of the disclosure.

According to some embodiments, a negative electrode for a rechargeable lithium battery includes a current collector; and a negative electrode active material layer on the current collector and including a negative electrode active material, wherein the negative electrode active material includes Si, a total volume of Si is greater than about 0 volume% and less than or equal to about 70 volume% based on a total 100 volume% of the negative electrode active material layer, and at least one hole is in the negative electrode active material layer (i.e., the negative electrode active material layer has the at least one hole), and a total volume of the at least one hole is about 5 times or less of the total volume of Si.

According to some embodiments, a rechargeable lithium battery includes the negative electrode; a positive electrode; and an electrolyte.

At least some of the above and other features of the invention are set out in the claims.

Other embodiments of the present disclosure are included in the following detailed description.

The negative electrode for a rechargeable lithium battery according to some embodiments may exhibit excellent or suitable high-rate charging and cycle-life characteristics.

### BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings:
FIG. 1 is a schematic view showing a negative electrode for a rechargeable lithium battery according to some embodiments.
FIG. 2 is a schematic view showing a negative electrode for a rechargeable lithium battery according to some embodiments.
FIG. 3 is a diagram for explaining the spacing of holes formed in the negative electrode according to some embodiments.
FIG. 4 is a schematic view showing a rechargeable lithium battery according to some embodiments.

### DETAILED DESCRIPTION

Hereinafter, embodiments of the present disclosure are described in more detail. However, these embodiments are examples, the present disclosure is not limited thereto and the scope of the present disclosure is defined by the claims and equivalents thereof.

The terminology used herein is used to describe embodiments only, and is not intended to limit the scope of the present disclosure. The singular expression includes the plural expression unless the context clearly dictates otherwise.

As used herein, "a combination thereof" refers to the constituents of a mixture, a laminate, a composite, a copolymer, an alloy, a blend, a reaction product, and/or the like.

Here, it should be understood that terms such as "comprises," "includes," or "have" are intended to designate the presence of an embodied feature, number, step, element, or any combination thereof, but do not preclude the possibility of the presence or addition of one or more other features, numbers, steps, elements, or any combination thereof.

Throughout the specification of the present disclosure, the expression "a constituent component 'includes' a certain component" does not exclude other components but other components may be included, unless specifically stated to the contrary.

In addition, the terms "about", "substantially", etc. used to modify a value throughout the specification herein are used in the sense of being at or close to that value when manufacturing and material tolerances inherent in the stated meaning are presented and are used to prevent unscrupulous infringers from taking unfair advantage of disclosures in which precise or absolute drawings are mentioned so as to aid understanding of the present disclosure.

Throughout this specification, the description of "A and/or B" refers to "A or B or both (e.g., concurrently (e.g., simultaneously))."
- "Thickness" may be measured through a picture taken with an optical microscope such as a scanning electron microscope.

As used herein, when a definition is not otherwise provided, a particle diameter may be an average particle diameter. This average particle diameter refers to an average particle diameter (D50), which is a diameter of particles with a cumulative volume of 50 volume% in the particle size distribution. If (when) the particle size/diameter is spherical, the size/diameter refers to the particle diameter or average particle diameter, and if (when) the particle size/diameter is not spherical, the diameter refers to a major axis length or an average major axis length. The average particle size (D50) may be measured by any suitable methods (e.g., known to those skilled in the art), for example, by measuring with a particle size analyzer, a transmission electron microscope or scanning electron microscope, and/or a scanning electron microscope or field emission scanning electron microscopy (FE-SEM). In some embodiments, a dynamic light-scattering measurement device is utilized to perform a data analysis, and the number of particles is counted for each particle size range. From this, the average particle diameter (D50) value may be easily obtained through a calculation. A laser diffraction method may also be utilized. When measuring by laser diffraction, in some embodiments, the particles to be measured are dispersed in a dispersion medium and then introduced into a commercially available laser diffraction particle size measuring device (e.g., MT 3000 available from Microtrac, Inc.) utilizing ultrasonic waves at about 28 kHz, and after irradiation with an output of 60 W, the average particle size (D50) based on 50% of the particle size distribution in the measuring device may be calculated.

The term "active mass" as used herein refers to a solid mixture of active material, binder, and optionally conductive material. For example, the active mass may refer to an active material layer.

A negative electrode for a rechargeable lithium battery according to some embodiments includes a current collector, and a negative electrode active material layer disposed on the current collector and including a negative electrode active material, and at least one (e.g., one or more) hole is formed in the negative electrode active material layer.

In some embodiments, the negative electrode active material includes Si, and, for example, may include Si in an amount of greater than about 0 volume% and less than or equal to about 70 volume%, greater than about 0 volume% and less than or equal to about 50 volume% based on the total 100 volume% of the negative electrode active material layer, greater than about 0 volume% and less than or equal to about 40 volume% based on the total 100 volume% of the negative electrode active material layer, greater than about 0 volume% and less than or equal to about 30 volume% based on the total 100 volume% of the negative electrode active material layer, greater than about 0 volume% and less than or equal to about 20 volume% based on the total 100 volume% of the negative electrode active material layer, greater than about 0 volume% and less than or equal to about 10 volume% based on the total 100 volume% of the negative electrode active material layer, or greater than about 0 volume% and less than or equal to about 5 volume% based on the total 100 volume% of the negative electrode active material layer. Additionally, a volume occupied by the at least one hole may be about 5 times or less, about 0.2 times to about 5 times, or about 0.25 times to about 4 times the total volume of Si.

If (when) the volume of at least one hole (e.g., at least one opening), that is, a total volume of all the holes (e.g., all the openings) in the negative electrode active material layer is at most about 5 times of the total volume of Si, even though Si expands in volume during charging and discharging, the hole may accommodate the expanded Si. Accordingly, because detachment of the negative electrode active material layer due to the Si volume expansion may be effectively prevented or reduced, cycle-life characteristics may be improved. In some embodiments, the holes formed in the negative electrode active material layer may improve electrolyte impregnation characteristics, exhibiting substantially uniform and stable electrochemical characteristics. Furthermore, because the formed holes act as lithium ion paths, that is, paths for transferring lithium ions and thus improve input/output characteristics, the negative electrode active material may be suitably (e.g., usefully) applied to high-rate charging and high-power batteries.

The total volume of the holes, that is, the volume occupied by all the holes is suitable (e.g., sufficient) at up to at most about 5 times of the total volume of Si, but if (when) the holes are formed to have a volume of greater than about 5 times of the total volume of Si in the negative electrode active material layer, the holes may have such a large volume that mechanical strength of the negative electrode active material layer may be much deteriorated. In addition, the negative electrode active material may be included in relatively so low an amount as to deteriorate capacity.

The total volume of Si refers to the Si amount/Si density included in the negative electrode active material layer. Herein, the density of Si may be a density at room temperature (20 °C to 25 °C) and may be about 2.3 g/cm³ to about 2.4 g/cm³.

In some embodiments, the hole refers to one formed by extending (e.g., penetrating) in a thickness direction from the surface of the negative electrode active material layer.

The effect of suppressing the Si volume expansion may be further increased by adjusting the Si amount in the negative electrode active material layer according to a position of the negative electrode active material layer and also, adjusting the hole volume according to the Si amount.

For example, if (when) the negative electrode active material layer includes a first region located in contact with the current collector and a second region located on (e.g., over) the first region, in the first region, a small amount of Si may be included, while a large amount of Si may be included in the second region. In another embodiment, the first region may include greater than or equal to about 0 wt% and less than about 50 wt% of Si based on 100 wt% of the total amount of Si, while the second region may include about 50 wt% to about 100 wt% of Si based on 100 wt% of the total amount of Si. If (when) the Si amount, as aforementioned, is different according to a position of the negative electrode active material layer (e.g., along a thickness direction) and, for example, if (when) the Si amount present on the negative electrode active material layer surface (corresponding to an upper portion) is larger than in a region (corresponding to a lower portion) adjacent to the current collector, there may be a desirable effect or advantage of securing high adherence between the negative electrode active material layer and the current collector, as the lower portion negative electrode active material layer may expand relatively less, and the Si expansion may be (e.g., easily) controlled through upper negative electrode structure modifications.

In some embodiments, because the holes may be formed in a larger volume in the second region with a larger Si amount than in the first region, the Si volume expansion may be more effectively absorbed. Because, for example, of the larger Si amount in the second region than in the first region, larger volume expansion may also occur in the second region than in the first region, but because the holes may be present in a larger volume in the second region than in the first region, the Si volume expansion may be more effectively absorbed. However, if (when) the holes formed in the second region with a larger Si amount have a smaller volume than the holes in first region, the larger Si volume expansion in the second region may be absorbed by the relatively smaller hole volume, while the smaller Si volume expansion in the first region may be absorbed by the relatively larger hole volume. Accordingly, the expansion reduction effect may not be significant over the whole negative electrode.

In some embodiments, the hole volume in the first region may be greater than about 0 volume% and less than or equal to about 50 volume% or greater than about 0 volume% and less than or equal to about 40 volume% based on the total hole volume, and the hole volume in the second region may be less than about 100 volume% and greater than or equal to about 50 volume% or less than 100 volume% and greater than or equal to 60 volume% based on the total hole volume. For example, the hole volume in the first region may be about 20% of the total 100% hole volume, while the hole volume in the second region may be about 80%.

This will be explained referring to the drawings.

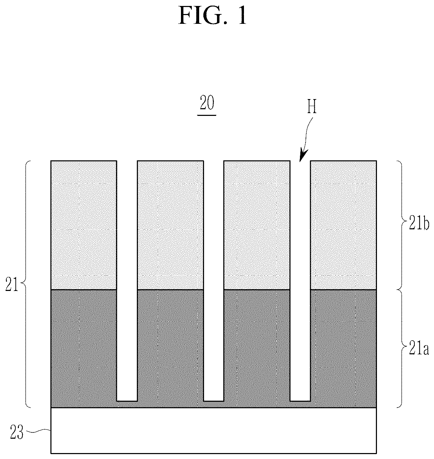

According to some embodiments, as shown in FIG. 1, a negative electrode active material layer 21 of a negative electrode 20 includes (e.g., consists of) a first region 21a and a second region 21b, and in the first region 21a and the second region 21b, holes (H) may (e.g., each) be formed with the same volume. Herein, the first region 21a may be a region contacting with a current collector 23.

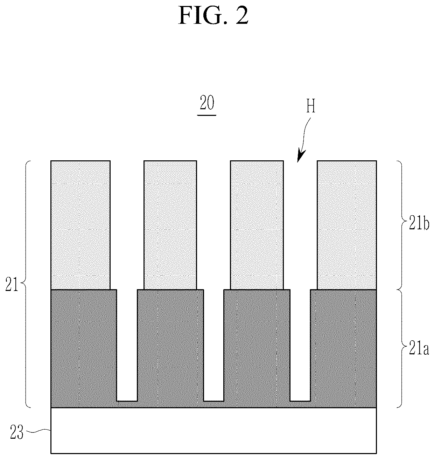

According to other embodiments, as shown in FIG. 2, the first region 21a may have a smaller hole volume than the second region 21b.

The holes may have any suitable shape such as circular, oval, rectangular, or square on one surface of the negative electrode active material layer in a length direction, for example, on one surface in contact with a separator, and accordingly, the hole shape is not necessary limited thereto.

A volume of the holes formed in the negative electrode active material layer may be obtained by adjusting an area of the holes. In some embodiments, an area of one hole refers to an area on the outermost surface of the negative electrode active material layer in contact with the separator, that is, an area if (when) the negative electrode active material layer is cut perpendicularly to a thickness direction (e.g., a plan view). In some embodiments, the holes are formed with the same thickness as a thickness of the negative electrode active material layer (e.g., the holes are through-holes, formed to penetrate the entire thickness of the negative electrode active material layer), therefore, a hole volume ratio may be the same as a hole area ratio, and the hole volume ratio may be expressed as the hole area ratio.

In some embodiments, the area of one hole may be adjusted according to a Si amount and/or distribution in the negative electrode active material layer.

If (when) the Si amount is higher in the second region than in the first region, the area of one hole in the second region may be larger than that of one hole in the first region. For example, the area of one hole in the second region may be about 0.025 mm² to about 0.5 mm² per unit area (1 mm X 1 mm) of the negative electrode active material layer, for example, greater than or equal to about 0.025 mm² and less than about 0.5 mm² or about 0.025 mm² to about 0.2 mm². The area of one hole in the first region may be less than about 0.25 mm² and greater than about 0 mm², about 0.2 mm² to about 0.01 mm², or about 0.1 mm² to about 0.02 mm² per unit area (1 mm X 1 mm) of the negative electrode active material layer.

In a negative electrode requiring high-rate/high-power characteristics, if (when) a volume of one hole is increased, the holes may suitably (e.g., well) absorb expansion of the second region during charging and discharging and also, secure ion mobility.

In some embodiments, the area of one hole may be determined from the top view of the electrode using a microscope to measure the dimension of the hole, or taking an SEM image for the cross-section of the electrode to measure the dimension.

In some embodiments, the first region and the second region may have a thickness ratio of about 50:50 to greater than about 0:100. If (when) the thickness ratio of the first region and the second region is within the ranges, expansion spaces in the first and second regions may be determined according to an Si amount ratio. The thickness refers to a length extending from the surface of the current collector toward the surface (e.g., facing away from the current collector) of the negative electrode active material layer.

In some embodiments, under the condition that the holes have the hole area within the ranges, a diameter of the holes may be appropriately adjusted and may be, for example, greater than about 0 µm to about 80 µm or about 0.01 µm to about 80 µm. In some embodiments, because the shape of the holes needs not to be limited, the diameter may be a diameter of a circular hole, and if (when) the holes are oval, the diameter may be a length of a major axis, if (when) the holes are rectangular, the diameter may be a length of a long side (e.g., axis), and if (when) the holes are square, the diameter may be a length of one side (e.g., axis).

In some embodiments, spacing between the holes (e.g., between or separating two corresponding or neighboring holes) may be about 50 µm to about 200 µm or about 50 µm to about 100 µm. If (when) the spacing between the holes is within these ranges, hole density may be increased, further improving high-rate charging performance and a cycle-life.

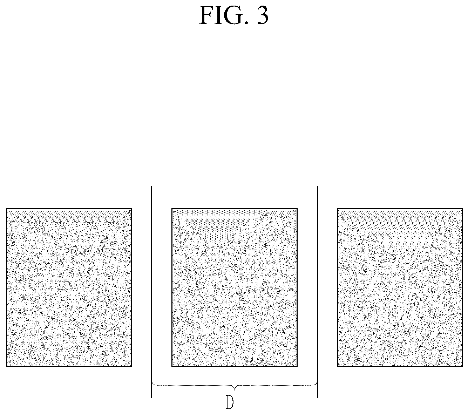

In some embodiments, the spacing refers to a distance between two neighboring holes, and as shown in FIG. 3, a distance (D) between (e.g., the centers of) the two neighboring holes.

In the negative electrode, according to some embodiments, the negative electrode active material may be a Si-C composite and/or silicon oxide. According to some embodiments, the negative electrode active material may include a silicon-based material of Si, Si-C composite, and/or silicon oxide, and a carbon-based material.

The composite of Si and carbon (Si-C composite) may have a form in which amorphous carbon is coated on the surface of the silicon-based material (e.g., in the form of particles). For example, the Si-C composite may include secondary particles (each) where silicon primary particles are agglomerated and an amorphous carbon coating layer is on the surface of the secondary particles. The amorphous carbon may also be disposed between the silicon primary particles, for example, the silicon primary particles may be coated with amorphous carbon. In some embodiments, the Si-C composite may include a core in which silicon particles are dispersed in an amorphous carbon matrix and an amorphous carbon coating layer coating the surface of the core.

Because the secondary particle is present at the center of the Si-C composite, it may be called the core or the center portion. Additionally, the amorphous carbon coating layer may be referred to as an outer portion or shell.

If (when) the silicon-carbon composite includes silicon and amorphous carbon, a mixing ratio of silicon and amorphous carbon may be about 20:80 to about 30:70 by weight.

The silicon particles may be nano silicon particles (particles in nanometer scale). A particle diameter (size/diameter) of the nano silicon particles may be about 10 nm to about 1,000 nm, and according to some embodiments, about 20 nm to about 900 nm, about 20 nm to about 800 nm, about 20 nm to about 500 nm, about 20 nm to about 300 nm, or about 20 nm to about 150 nm. If (when) the average particle diameter of the silicon particles is within the above ranges, excessive volume expansion that occurs during charging and discharging may be suppressed or reduced, and disconnection of the conductive path due to particle crushing during charging and discharging may be prevented or reduced.

The amorphous carbon may be soft carbon, hard carbon, a mesophase pitch carbonized product, sintered coke, or any combination thereof.

In some embodiments, the secondary particles or the core may further include crystalline carbon. If (when) the Si-C composite further includes crystalline carbon, the Si-C composite may include secondary particles where silicon primary particles and crystalline carbon are agglomerated, and an amorphous carbon coating layer is on the surface of the secondary particles.

The crystalline carbon may include unspecified-shaped (e.g., irregular-shaped), sheet-shaped, flake-shaped, spherical, or fibrous graphite such as natural graphite or artificial graphite.

If (when) the Si-C composite further includes crystalline carbon, a resistance of the active material itself is reduced, thereby suppressing a decrease in initial cycle-life.

If (when) Si-C composite includes silicon particles, crystalline carbon, and amorphous carbon, an amount of the amorphous carbon may be about 30 wt% to about 70 wt% based on 100 wt% of the total Si-C composite, and an amount of the crystalline carbon may be about 1 wt% to about 20 wt% based on 100 wt% of the total Si-C composite. Additionally, an amount of silicon particles may be about 20 wt% to about 69 wt% based on 100 wt% of the total Si-C composite, and according to some embodiments, about 30 wt% to about 60 wt% based on 100 wt% of the total Si-C composite.

There should be no specific limit on the particle size of the Si-C composite as long as it is appropriately or suitably adjusted.

If (when) the amorphous carbon is present around (e.g., surrounding) the surface of the secondary particle, its thickness may be adjusted appropriately, but may be, for example, about 5 nm to about 100 nm.

If (when) the negative electrode active material is silicon oxide, the silicon oxide may be SiOₓ particles, wherein in SiOₓ, x may be in a range of greater than about 0 and less than about 2.

The carbon-based material which may be utilized with the silicon-based material as a negative electrode active material may be crystalline carbon. The crystalline carbon may be the same as aforementioned.

If (when) the crystalline carbon, for example, graphite alone is utilized without including Si as a negative electrode active material, because the crystalline carbon does not have large volume expansion during charging and discharging, there may be no large effect of absorbing the expanded active material by holes, and therefore an additional hole processing process may just increase the cost of production. In other words, the effect of suppressing the volume expansion according to formation of the holes by the hole processing is not very significant. In addition, the holes formed in the negative electrode active material layer may deteriorate capacity, because crystalline carbon, for example, graphite has smaller capacity than Si, capacity per volume may be significantly deteriorated.

In some embodiments, the negative electrode active material layer also includes a binder and may optionally further include a conductive material. An amount of the binder in the negative electrode active material layer may be about 1 to about 5 wt% based on a total weight of the negative electrode active material layer. If (when) the conductive material is further included, the negative electrode active material layer may include about 90 to about 98 wt% of the negative electrode active material, about 1 to about 5 wt% of the binder, and about 1 to about 5 wt% of the conductive material.

The binder serves to adhere the negative electrode active material particles to each other and also helps the negative electrode active material to adhere to the current collector. The binder may include a non-aqueous binder, an aqueous binder, or any combination thereof.

The non-aqueous binder may include ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamideimide, polyimide, or any combination thereof.

The aqueous binder may include a styrene-butadiene rubber (SBR), an acrylated styrene-butadiene rubber (ABR), an acrylonitrile-butadiene rubber, an acrylic rubber, a butyl rubber, a fluorine rubber, an ethylene oxide-containing polymer, polyvinylpyrrolidone, polypropylene, polyepichlorohydrin, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or any combination thereof.

The aqueous binder may also include a cellulose-based compound. This cellulose-based compound may be utilized alone or mixed with the aqueous binder. The cellulose-based compound may include one or more of carboxymethyl cellulose, hydroxypropylmethyl cellulose, methyl cellulose, or alkali metal salts thereof. The alkali metal may include (e.g., may be) Na, K, and/or Li. The cellulose-based compound may impart viscosity, and thus may be referred to as a thickener. It may also act as a binder, and thus it may also be referred to as a binder. Accordingly, an amount of the cellulose-based compound may be appropriately adjusted and does not need to be limited. For example, an amount of the cellulose-based compound utilized may be about 0.1 parts by weight to about 3 parts by weight based on 100 parts by weight of the negative electrode active material.

The conductive material may be included to provide electrode conductivity, and any suitable electrically conductive material may be utilized as a conductive material unless it causes a chemical change. Examples of the conductive material may include (e.g., may be) a carbon-based material such as natural graphite, artificial graphite, carbon black, acetylene black, ketjen black, channel black, furnace black, lamp black, thermal black, a carbon fiber, and/or the like; a metal-based material of a metal powder or a metal fiber including copper, nickel, aluminium, silver, and/or the like; a conductive polymer such as a polyphenylene derivative; or a mixture thereof.

The current collector may include one selected from among a copper foil, a nickel foil, a stainless steel foil, a titanium foil, a nickel foam, a copper foam, a polymer substrate coated with a conductive metal, and a combination thereof, but is not limited thereto.

The negative electrode according to some embodiments may be manufactured by forming the negative electrode active material layer on the current collector and then, forming holes therein. The holes may be formed by adopting any suitable method capable of forming the holes, for example, needle punching, laser punching, and/or the like. If (when) the holes are formed by the needle punching method, a mold suitable for a desired or suitable hole volume may be utilized to punch the first region and subsequently, punch the second region. In some embodiments, if (when) the holes are formed by the laser punching method, a volume of the holes may be adjusted by adjusting power of the irradiated laser and a diameter of the holes.

The negative electrode active material layer may be formed by a suitable method of coating, drying, and compressing a negative electrode active material layer composition including a negative electrode active material, a binder, and optionally a conductive material and a solvent on a current collector. The solvent may be N-methylpyrrolidone, water, or any combination thereof, and if (when) a water-soluble binder is utilized as the binder, water may be utilized. Additionally, if (when) the negative electrode active material layer includes a first region and a second region, it may be formed by coating and drying the first region composition, then coating and drying the second region composition, and compressing (e.g., the negative electrode active material layer). The first region composition and the second region composition may include a negative electrode active material, a binder, and optionally a conductive material and a solvent in substantially the same manner as the negative electrode active material composition, except that the Si amount is increased (e.g., higher) in the second region composition.

Some embodiments provide a rechargeable lithium battery including a negative electrode, a positive electrode, and an electrolyte. The negative electrode may be a negative electrode according to some embodiments.

The positive electrode may include a positive current collector and a positive electrode active material layer formed on the positive current collector. The positive electrode active material may include lithiated intercalation compounds that may reversibly intercalate and deintercalate lithium ions. For example, one or more composite oxides of a metal selected from cobalt, manganese, nickel, and any combination thereof, and lithium may be utilized. In some embodiments, the compounds represented by one or more of the following Chemical Formulas may be utilized: LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1) LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); and LiₐFePO₄ (0.90 ≤ a ≤ 1.8)

In these Chemical Formulas, A is selected from among Ni, Co, Mn, and combinations thereof; X is selected from among Al, Ni, Co, Mn, Cr, Fe, Mg, Sr, V, a rare earth element, and combinations thereof; D' is selected from among O, F, S, P, and combinations thereof; E is selected from among Co, Mn, and combinations thereof; T is selected from among F, S, P, and combinations thereof; G is selected from among Al, Cr, Mn, Fe, Mg, La, Ce, Sr, V, and combinations thereof; Q is selected from among Ti, Mo, Mn, and combinations thereof; Z is selected from among Cr, V, Fe, Sc, Y, and combinations thereof; J is selected from among V, Cr, Mn, Co, Ni, Cu, and combinations thereof; and L¹ is selected from among Mn, Al, and combinations thereof.

Also, the compounds may have a coating layer on the surface, or may be mixed with another compound having a coating layer thereon. The coating layer may include at least one coating element compound selected from among an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a suitable method having (substantially) no adverse influence on properties of a positive electrode active material by utilizing these elements in the compound, and, for example, the method may include any suitable coating method such as spray coating, dipping, and/or the like, but is not illustrated in more detail because it is known in the related field.

An amount of the positive electrode active material in the positive electrode active material layer may be about 90 wt% to about 98 wt% based on the total weight of the positive electrode active material layer.

The positive electrode active material layer may also include a binder and a conductive material. Herein, amounts of the binder and the conductive material may each be about 1 wt% to about 5 wt% based on a total weight of the positive electrode active material layer.

The binder improves binding properties of positive electrode active material particles with one another and with a current collector, and examples thereof may include (e.g., may be) polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but is not limited thereto.

The conductive material may be utilized to impart conductivity to the electrode, and any suitable material may be utilized as long as it does not cause chemical change in the battery to be configured and is an electron conductive material. Examples of the conductive material may include a carbon-based material such as natural graphite, artificial graphite, carbon black, acetylene black, ketjen black, a carbon fiber, and/or the like; a metal-based material of a metal powder or a metal fiber including copper, nickel, aluminium, silver, and/or the like; a conductive polymer such as a polyphenylene derivative; or a mixture thereof.

The current collector may include Al, but is not limited thereto.

The positive electrode may be manufactured by mixing an active material, a conductive material, and a binder in a solvent to prepare an active material composition, and coating this composition on a current collector. Because this method of manufacturing a positive electrode is known in the art, detailed description will not be provided in this specification. The solvent may include N-methylpyrrolidone and/or the like, but is not limited thereto.

The electrolyte may include a non-aqueous organic solvent and a lithium salt.

The non-aqueous organic solvent serves as a medium for transmitting (e.g., transporting) ions taking part in the electrochemical reaction of a battery.

The non-aqueous organic solvent may include a carbonate-based, ester-based, ether-based, ketone-based, alcohol-based, and/or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like and the ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like and the ketone-based solvent may include cyclohexanone, and/or the like. The alcohol-based solvent may include ethyl alcohol, isopropyl alcohol, and/or the like, and the aprotic solvent may include one or more nitriles such as R-CN (where R is a C2 to C20 linear, branched, or cyclic hydrocarbon, a double bond, an aromatic ring, or an ether bond), amides such as dimethylformamide, dioxolanes such as 1,3-dioxolane, 1,4-dioxolane, sulfolanes, and/or the like.

The non-aqueous organic solvent may be utilized alone or in a mixture of two or more. If (when) the non-aqueous organic solvent is utilized in a mixture, the mixture ratio may be controlled or selected in accordance with a desirable battery performance.

If (when) a mixed non-aqueous organic solvent is utilized, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be utilized. The propionate-based solvent may be methyl propionate, ethyl propionate, propyl propionate, or any combination thereof.

Herein, if (when) the cyclic carbonate and the chain carbonate or the cyclic carbonate and the propionate-based solvent are mixed, they may be mixed in a volume ratio of about 1:1 to about 1:9 and thus performance of an electrolyte solution may be improved. In some embodiments, if (when) the cyclic carbonate, the chain carbonate, and the propionate-based solvent are mixed, they may be mixed in a volume ratio of about 1:1:1 to about 3:3:4. The mixing ratios of the solvents may be appropriately adjusted according to desirable properties.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula 1.

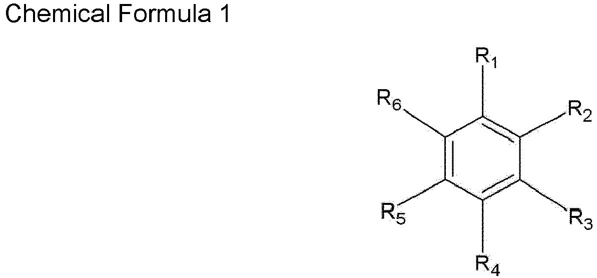

In Chemical Formula 1, R₁ to R₆ may be the same or different and may be each independently selected from among hydrogen, a halogen, a C1 to C10 alkyl group, a haloalkyl group (e.g., a C1 to C10 haloalkyl group), and any combination thereof.

Examples of the aromatic hydrocarbon-based organic solvent may be selected from among benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and any combination thereof.

The non-aqueous electrolyte may further include an additive of vinylethyl carbonate, vinylene carbonate, and/or an ethylene carbonate-based compound of Chemical Formula 2 in order to improve a cycle-life of a battery.

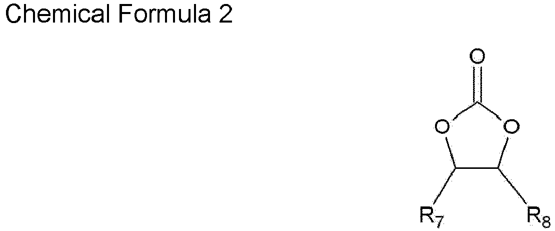

In Chemical Formula 2, R₇ and R₈ may be the same or different, and may be each independently selected from among hydrogen, a halogen, a cyano group (CN), a nitro group (NO₂), and a fluorinated C1 to C5 alkyl group, provided that at least one of R₇ or R₈ is selected from a halogen, a cyano group (CN), a nitro group (NO₂), and a fluorinated C1 to C5 alkyl group, and R₇ and R₈ are not both hydrogen (concurrently).

Examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, and fluoroethylene carbonate. The amount of the additive for improving a cycle-life may be utilized within an appropriate or suitable range.

The lithium salt dissolved in an organic solvent supplies a battery with lithium ions, thereby enabling the basic operation of the rechargeable lithium battery, and improving transportation of the lithium ions between positive and negative electrodes. Examples of the lithium salt may include one or more (e.g., two) selected from among LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂) (where x and y are natural numbers, for example integers of 1 to 20), lithium difluoro(bisoxolato) phosphate, LiCl, Lil, LiB(C₂O₄)₂ (lithium bis(oxalato) borate: LiBOB) and lithium difluoro(oxalato) borate (LiDFOB), as a supporting electrolytic salt. A concentration of the lithium salt may range from about 0.1 to about 2.0 M. If (when) the lithium salt is included at the above concentration range, an electrolyte may have excellent or suitable performance and lithium ion mobility due to optimal or suitable electrolyte conductivity and viscosity.

The rechargeable lithium battery may further include a separator between the negative electrode and the positive electrode, depending on a kind of the battery. Examples of a separator material may include polyethylene, polypropylene, polyvinylidene fluoride, or multi-layers having two or more layers thereof, such as a polyethylene/polypropylene double-layered separator, a polyethylene/polypropylene/polyethylene triple-layered separator, or a polypropylene/polyethylene/polypropylene triple-layered separator.

In some embodiments, the separator may include a layer of the separator material as a substrate and may further include a coating layer on at least one surface of the layer.

The coating layer may include a ceramic. The ceramic may include SiO₂, Al₂O₃, Al(OH)₃, AlO(OH), TiO₂, BaTiO₂, ZnO₂, Mg(OH)₂, MgO, Ti(OH)₄, ZrO₂, aluminium nitride, silicon carbide, boron nitride, or any combination thereof.

The coating layer may be a functional layer capable of adding additional functions. This functional layer may be, for example, at least one of a heat resistant layer or an adhesive layer. The heat resistant layer may include a heat resistant resin and optionally a filler. In some embodiments, the adhesive layer may include an adhesive resin and optionally a filler. The filler may be an organic filler, an inorganic filler, or any combination thereof. The heat resistant resin, the adhesive resin, and the filler may be any suitable material that may be utilized in separators in the relevant field.

Rechargeable lithium batteries may be classified into lithium ion batteries, lithium ion polymer batteries, and lithium polymer batteries depending on the type or kind of separator and electrolyte utilized, may be classified into cylindrical, prismatic, coin, pouch, etc., batteries depending on their shape, and may be classified into bulk type or kind and thin film type or kind batteries depending on the size. The structures and manufacturing methods of these batteries are known in this field, and thus detailed descriptions thereof are not provided.

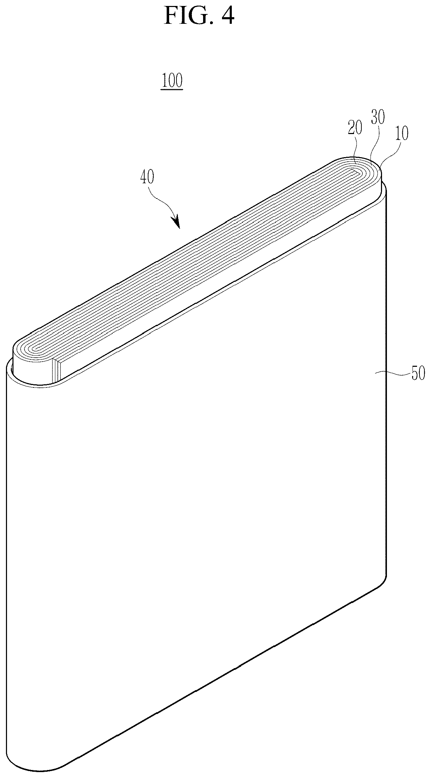

FIG. 4 is an exploded perspective view of a rechargeable lithium battery according to some embodiments. The rechargeable lithium battery according to some embodiments is illustrated as a prismatic battery but the present disclosure is not limited thereto and the rechargeable lithium battery may include variously-shaped batteries such as a cylindrical battery, a pouch battery, and/or the like.

Referring to FIG. 4, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte may be impregnated in the positive electrode 10, the negative electrode 20 and the separator 30.

Hereinafter, examples of the present disclosure and comparative examples are described. These examples, however, are not in any sense to be interpreted as limiting the scope of the present disclosure.

### Example 1

An ethanol solvent and silicon particles with a particle diameter of several micrometers were mixed in a weight ratio of 8.5:1.5 and then, prepared into a silicon nano dispersion by utilizing a bead mill (Netsch, Germany).

The silicon nano dispersion was mixed with natural graphite in a weight ratio of 8.8:1.2, and this mixed solution was spray-dried at 180 °C by utilizing a spray drier to prepare a Si precursor.

The obtained Si precursor was mixed with meso pitch in a weight ratio of 10:90, and this mixture was heat-treated at 900 °C under a N₂ atmosphere for 2 hours to prepare a silicon-carbon composite (e.g., a silicon-carbon composite negative electrode active material). This silicon-carbon composite included an agglomerated product of a secondary particle, in which nano silicon particles were agglomerated, and a soft carbon coating layer was formed on the agglomerated product surface, wherein an amount of the nano silicon particles was 8.8 wt% based on 100 wt% of the total silicon-carbon composite, an amount of the soft carbon amorphous carbon was 90 wt%, and an amount of the natural graphite was 1.2 wt%. In addition, the soft carbon coating layer had a thickness of 2 nm.

11 wt% of the prepared silicon-carbon composite negative electrode active material, 44 wt% of graphite (a mixture of artificial graphite and natural graphite in a weight ratio of 50:50), 20 wt% of carboxymethyl cellulose, and 25 wt% of a styrene-butadiene rubber were mixed in a water solvent to prepare a first region slurry.

On the other hand, a second region slurry was prepared by mixing 17 wt% of the prepared silicon-carbon composite negative electrode active material, 81 wt% of graphite (a mixture of artificial graphite and natural graphite in a weight ratio of 50:50), 1 wt% of carboxymethyl cellulose, and 1 wt% of a styrene-butadiene rubber in a water solvent.

The first region slurry (e.g., the first region negative electrode active material layer slurry) was coated on a Cu foil current collector and then, dried to form a first region, and subsequently, the second region slurry was coated thereon and then, dried and pressurized to form a second region, thereby preparing a negative electrode active material layer on the current collector. In the prepared negative electrode active material layer, the negative electrode active material layer had a thickness of 100 µm, the first region had a thickness of 50 µm, and the second region had a thickness of 50 µm.

Subsequently, laser holes were formed to have different hole diameters in the first region and the second region of the negative electrode active material layer and thus to manufacture a negative electrode. In the manufactured negative electrode, a volume of Si was 1 volume% based on 100 volume% of the total negative electrode active material layer (active mass layer), and a volume of the holes in the negative electrode active material layer was 400 volume% based on 100% of the total volume of Si. Accordingly, the volume of the holes was 4 volume% based on the total 100 volume% of the negative electrode active material layer.

In addition, a ratio of Si in the second region: Si in the first region was 60:40, wherein a hole volume in the first region was 40% based on a total hole volume, and a hole volume in the second region was 60% based on the total hole volume. An area of one hole (e.g., an average area of holes) in the second region was 0.05 mm² per unit area (1 mm X 1 mm) of the negative electrode active material layer, and an area of one hole (e.g., an average area of holes) in the first region was 0.03 mm² per unit area (1 mm X 1 mm) of the negative electrode active material layer, and a thickness of the hole was 100 µm. In addition, spacing between the neighboring holes was 100 µm.

The negative electrode was utilized with a lithium metal counter electrode and an electrolyte to fabricate a symmetric lithium half-cell. The electrolyte was prepared by dissolving 1 M LiPF₆ in ethylene carbonate and dimethyl carbonate (in a volume ratio of 3:7).

### Example 2

22 wt% of the silicon-carbon composite negative electrode active material of Example 1, 33 wt% of graphite (a mixture of artificial graphite and natural graphite in a weight ratio of 50:50), 20 wt% of carboxymethyl cellulose, and 25 wt% of a styrene-butadiene rubber were mixed in a water solvent to prepare a first region slurry.

A second region slurry was prepared by mixing 34 wt% of the silicon-carbon composite negative electrode active material of Example 1, 64 wt% of graphite (a mixture of artificial graphite and natural graphite in a weight ratio of 50:50), 1 wt% of carboxymethyl cellulose, and 1 wt% of a styrene-butadiene rubber in a water solvent.

The first region slurry and the second region slurry were utilized in substantially the same manner as in Example 1 to form a negative electrode active material layer.

Subsequently, holes were formed to have different hole diameters in the first and second regions of the negative electrode active material through laser hole processing to manufacture a negative electrode. In the manufactured negative electrode, a volume of Si was 2 volume% based on 100 volume% of the total negative electrode active material layer (active mass layer), and a hole volume in the negative electrode active material layer was 400 volume% based on 100% of the total Si volume. Accordingly, the hole volume was 8 volume% based on 100 volume% of the total negative electrode active material layer.

In addition, a hole volume in the first region was 40% based on a total volume of the holes, and a hole volume in the second region was 60% based on the total volume of the holes. An area of one hole (e.g., an average area of holes) formed in the second region was 0.10 mm² per unit area (1 mm X 1 mm) of the negative electrode active material layer, and an area of one hole (e.g., an average area of holes) in the first region was 0.06 mm² per unit area (1 mm X 1 mm) of the negative electrode active material layer, and each hole had a thickness of 100 µm. In addition, spacing of the neighboring holes was 100 µm.

This negative electrode was utilized in substantially the same manner as in Example 1 to manufacture a symmetric lithium half-cell.

### Comparative Example 1

Silicon nano dispersion was prepared by mixing an ethanol solvent and silicon particles with a particle diameter of several micrometers in a weight ratio of 8.5:1.5 and utilizing a bead mill (Netzsch, Germany).

The silicon nano dispersion was mixed with natural graphite in a weight ratio of 8.8:1.2, and this mixed solution was spray-dried at 180 °C by utilizing a spray drier to prepare an Si precursor.

The obtained Si precursor was mixed with meso pitch in a weight ratio of 10:90, and this mixture was heat-treated at 900 °C under a N₂ atmosphere for 2 hours to prepare a silicon-carbon composite (e.g., a silicon-carbon composite negative electrode active material). This silicon-carbon composite included an agglomerated product of a secondary particle, in which nano silicon particles were agglomerated, and a soft carbon coating layer was on the agglomerated product surface, wherein an amount of the nano silicon particles was 8.8 wt%, an amount of the soft carbon amorphous carbon was 90 wt%, and an amount of the natural graphite was 1.2 wt%. In addition, the soft carbon coating layer had a thickness of 2 nm.

11 wt% of the prepared silicon-carbon composite negative electrode active material, 44 wt% of graphite (a mixture of artificial graphite and natural graphite in a weight ratio of 50:50), 20 wt% of carboxymethyl cellulose, and 25 wt% of a styrene-butadiene rubber were mixed in a water solvent to prepare a first region slurry.

A second region slurry was prepared by mixing 17 wt% of the prepared silicon-carbon composite negative electrode active material, 81 wt% of graphite (a mixture of artificial graphite and natural graphite in a weight ratio of 50:50), 1 wt% of carboxymethyl cellulose, and 1 wt% of a styrene-butadiene rubber in a water solvent.

The first region slurry (e.g., the first region negative electrode active material layer slurry) was coated on a Cu foil current collector and then, dried to form a first region, and subsequently, the second region slurry was coated thereon and then, dried and rolled to form a second region and thus to manufacture a negative electrode having a negative electrode active material layer formed on the current collector. In the formed negative electrode active material layer, the negative electrode active material layer had a thickness of 100 µm, the first region had a thickness of 50 µm, and the second region had a thickness of 50 µm.

This negative electrode was utilized in substantially the same manner as in Example 1 to fabricate a lithium half-cell.

### Comparative Example 2

11 wt% of the silicon-carbon composite negative electrode active material of Example 1, 44 wt% of graphite (a mixture of artificial graphite and natural graphite in a weight ratio of 50:50), 20 wt% of carboxymethyl cellulose, and 25 wt% of a styrene-butadiene rubber were mixed in a water solvent to prepare a first region slurry.

A second region slurry was prepared by mixing 17 wt% of the silicon-carbon composite negative electrode active material Example 1, 81 wt% of graphite (a mixture of artificial graphite and natural graphite in a weight ratio of 50:50), 1 wt% of carboxymethyl cellulose, and 1 wt% of a styrene-butadiene rubber in a water solvent.

The first region slurry and the second region slurry were utilized in substantially the same manner as in Example 1 to form a negative electrode active material layer.

Subsequently, holes were formed to have different diameters in the first region and the second region of the negative electrode active material layer through laser hole processing to manufacture a negative electrode.

In the manufactured negative electrode, a volume of Si was 1 volume% based on 100 volume% of the total negative electrode active material layer (active mass layer), and a volume of the holes in the negative electrode active material layer was 600 volume% based on 100% of the total Si volume. Accordingly, the hole volume was 6 volume% based on 100 volume% of the total negative electrode active material layer.

In addition, the hole volume based on the total holes in the first region was 40% based on the a total hole volume, and the hole volume based on the total holes in the second region was 60% based on the total hole volume, wherein an area of one hole (e.g., an average area of holes) in the second region was 0.07 mm² per unit area (1 mm X 1 mm) of the negative electrode active material layer, and an area of one hole (e.g., an average area of holes) in the first region was 0.05 mm² per unit area (1 mm X 1 mm) of the negative electrode active material layer, and the holes had a thickness of 100 µm. Furthermore, spacing between the neighboring holes was 100 µm.

The negative electrode was utilized in substantially the same manner as in Example 1 to manufacture a lithium half-cell.

### Experimental Example 1) Measurement of Ion Resistance

The half-cells of Examples 1 and 2 and Comparative Example 1 and 2 were measured with respect to ion resistance (Rion) by utilizing an impedance analyzer (Solartron 1260A Impedance/Gain-Phase Analyzer) at 25 °C in a 2-probe method. The results are shown in Table 1.

**Table 1**

| | Ion resistance (Ω/cm²) |
|---|---|
| Example 1 | 17.350 |
| Example 2 | 15.083 |
| Comparative Example 1 | 20.746 |
| Comparative Example 2 | 14.660 |

As shown in Table 1, Examples 1 to 2, in which holes in a negative electrode active material layer were formed in an amount of less than or equal to 5 times relative to the total volume of Si, exhibited lower ion resistance, compared with Comparative Example 1, in which no holes were formed. For example, as a total area of the holes increased based on 100% of the total volume of Si, the ion resistance decreased.

In addition, Comparative Example 2, in which holes were 6 times more in volume than the total volume of Si, exhibited lower ion resistance than Examples 1 and 2.

### Experimental Example 2) Measurement of Cycle-life Characteristics

The half-cells according to Examples 1 and 2 and the Comparative Examples 1 and 2 were charged and discharged 60 times at 1 C at room temperature (25 °C). A ratio of the 60^{th} discharge capacity to the 1^{st} discharge capacity was calculated. The results are shown as capacity retention in Table 2.

**Table 2**

| | Capacity retention (%) |
|---|---|
| Example 1 | 90.4% |
| Example 2 | 89.7% |
| Comparative Example 1 | 87.9% |
| Comparative Example 2 | 87% |

As shown in Table 2, Examples 1 to 2, in which holes were 5 times or less of the total volume of Si in the negative electrode active material layer, exhibited excellent or suitable capacity retention, compared with Comparative Example 1 in which no holes were formed.

In addition, Comparative Example 2, in which holes were 6 times of the total volume of Si, exhibited deteriorated capacity retention.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. An electronic apparatus, a battery management controlling device, a battery manufacturing device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the apparatus may be formed on one integrated circuit (IC) chip or on separate IC chips. Further, the various components of the apparatus may be implemented on a flexible printed circuit film, a tape carrier package (TCP), a printed circuit board (PCB), or formed on one substrate. Further, the various components of the apparatus may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

While this disclosure has been described in connection with what is presently considered to be practical embodiments, it is to be understood that the present disclosure is not limited to the disclosed embodiments. On the contrary, it is intended to cover various suitable modifications and equivalent arrangements included within the scope of the appended claims, and equivalents thereof. Therefore, the aforementioned embodiments should be understood to be examples but not limiting the present disclosure in any way.

## Claims

1. A negative electrode for a rechargeable lithium battery, comprising
a current collector; and
a negative electrode active material layer on the current collector and comprising a negative electrode active material,
wherein the negative electrode active material comprises Si, a total volume of Si is greater than about 0 volume% and less than or equal to about 70 volume% based on a total 100 volume% of the negative electrode active material layer, and
at least one hole is in the negative electrode active material layer, and a total volume of the at least one hole is about 5 times or less of the total volume of Si.

2. The negative electrode of claim 1, wherein the at least one hole extends in a thickness direction, of the negative electrode active material layer, from a surface of the negative electrode active material layer.

3. The negative electrode of claim 2, wherein the negative electrode active material layer comprises a first region in contact with the current collector and a second region on the first region,
Si in the first region is greater than about 0 wt% and less than about 50 wt% in amount based on a total 100 wt% of Si in the negative electrode active material layer,
Si in the second region is about 50 wt% to less than about 100 wt% based on the total 100 wt% of Si,
a volume of the at least one hole in the first region is greater than about 0 volume% and less than or equal to about 50 volume% based on the total volume of the at least one hole, and
a volume of the at least one hole in the second region is less than about 100 volume% and greater than or equal to about 50 volume% based on the total volume of the at least one hole.

4. The negative electrode of claim 3, wherein an average area of the at least one hole in the second region is larger than an average area of the at least one hole in the first region.

5. The negative electrode of claim 4, wherein the average area of the at least one hole in the second region is about 0.025 mm² to about 0.5 mm² per unit area of 1 mm by 1 mm of the negative electrode active material layer.

6. The negative electrode of claim 4 or claim 5, wherein the average area of the at least one hole in the first region is less than about 0.25 mm² and greater than about 0 mm² per unit area of 1 mm by 1 mm of the negative electrode active material layer.

7. The negative electrode of claim 2, wherein the negative electrode active material layer comprises a first region in contact with the current collector and a second region on the first region, and
a thickness ratio of a thickness of the first region to a thickness of the second region is at most about 50:50 and greater than 0.

8. The negative electrode of any one of claims 1 to 7, wherein in the second region, a spacing between adjacent holes is about 50 µm to about 100 µm.

9. The negative electrode of any one of claims 1 to 8, wherein the negative electrode active material is a Si-C composite or silicon oxide.

10. The negative electrode of any one of claims 1 to 8, wherein the negative electrode active material comprises a silicon-based material selected from among Si, a Si-C composite, and silicon oxide and a carbon-based material.

11. The negative electrode of claim 10, wherein the carbon-based material is crystalline carbon.

12. A rechargeable lithium battery comprising
the negative electrode of any one of claim 1 to claim 11;
a positive electrode; and
an electrolyte.
